Europäisches Patentamt

European Patent Office

Office européen des brevets

(19)

(11) **EP 0 316 749 B2**

(12) **NEUE EUROPÄISCHE PATENTSCHRIFT**

(45) Veröffentlichungstag und Bekanntmachung des Hinweises auf die Entscheidung über den Einspruch:
**25.07.2001   Patentblatt 2001/30**

(51) Int Cl.⁷: **B60J 7/22**, B60N 3/00

(45) Hinweis auf die Patenterteilung:
**16.06.1993   Patentblatt 1993/24**

(21) Anmeldenummer: **88118674.6**

(22) Anmeldetag: **10.11.1988**

(54) **Cabriolet mit einem Windschutz**

Convertible with a windprotection

Cabriolet avec un paravent

(84) Benannte Vertragsstaaten:
**ES FR GB IT**

(30) Priorität: **13.11.1987  DE 3738501**
**26.10.1988  DE 3836375**

(43) Veröffentlichungstag der Anmeldung:
**24.05.1989   Patentblatt 1989/21**

(73) Patentinhaber: **DaimlerChrysler AG**
**70567 Stuttgart (DE)**

(72) Erfinder:
 • **Götz, Hans**
  **D-7030 Böblingen 4 (DE)**
 • **Baumann, Karl-Heinz**
  **D-7031 Bondorf (DE)**

(56) Entgegenhaltungen:
DE-A- 2 056 801      DE-U- 8 617 748
FR-A- 1 216 983      FR-A- 2 250 326
GB-A- 2 182 010      US-A- 3 749 147

## Beschreibung

Die Erfindung betrifft einen hinter einer Sitzreihe angeordneten Windschutz für Cabriolets mit einem ersten aufrechten, sich über die Sitze hinaus nach oben erstreckenden, über die gesamte Innenraumbreite verlaufenden Teil, das mit seiner Unterkante etwa auf Höhe der Bordkante des Fahrzeugs endet und dort in ein etwa horizontales, eine Öffnung hinter den Sitzen nach hinten überdeckendes Teil übergeht.

Ein derartig ausgestattetes Cabriolet ist bereits der DE 35 37 644 C1 als bekannt zu entnehmen. Die dort verwendete horizontale Abdeckplatte und die aufrechte Schutzscheibe erbringen aber keinen optimalen Schutz der Benutzer der davor angeordneten Sitze vor störenden Luftströmungen und es sind keine Maßnahmen vorgesehen, um bei sehr langsamer Fahrt eine optimale Luftzufuhr für die vorn sitzenden Insassen zu erreichen.

Der vorliegenden Erfindung liegt die Aufgabe zugrunde, einen gattungsgemäßen Windschutz für ein Cabriolet derart auszubilden, daß für die vorderen Insassen bei langsamer Fahrt eine optimale Luftzufuhr erreichbar ist und gleichzeitig bei höherer Fahrgeschwindigkeit störende Luftströmungen vermieden werden.

Diese Aufgabe wird erfindungsgemäß dadurch gelöst, daß beide Teile des Windschutzes über Scharniere miteinander verbunden und jeweils durch ein in einem Rahmen aufgespanntes flexibles Netz gebildet sind, das eine Verzögerung der von hinten auftreffenden Luftströmung bewirkt.

Die besondere Wirkung des erfindungsgemäßen Windschutzes unter Verwendung eines flexiblen Netzes beruht auf folgenden Verhältnissen:

Im Fahrgastraum eines Cabriolets bildet sich während der Fahrt ein starker Unterdruck, der zu geräuschvollen Luftverwirbelungen führt, die außerdem als lästige Zugluft empfunden werden. Durch einen erfindungsgemäßen Windschutz dagegen wird der Unterdruck dosiert aufgefüllt, so daß die Geräuschbelästigungen praktisch entfallen und die verbleibende Zugluft nur noch als leichter Hauch empfunden wird.

Darüber hinaus schafft die leichte Umklappbarkeit des aufrechten Teils des Windschutzes in eine hintere Ruhelage den Fahrzeuginsassen die Möglichkeit, z.B. bei sehr langsamer Stadtfahrt in den Genuß einer stärkeren Luftströmung zu kommen.

Der Gegenstand der Erfindung soll im folgenden anhand eines in der Zeichnung dargestellten Ausführungsbeispiels näher erläutert werden.

In der Zeichnung zeigen

Fig. 1     schematisch in einer teilweise aufgebrochenen Seitenansicht ein Cabriolet mit hinter den Sitzen angeordnetem Windschutz mit einem oberen stehend angeordneten Teil und einem sich unten daran anschließenden, etwa horizontalen Teil,

Fig. 2     in größerem Maßstab einen Schnitt durch einen ovalen Rahmen des Windschutzes und

Fig. 3     ein Diagramm der Strömungsverhältnisse bei Netzen unterschiedlicher Dehnbarkeit.

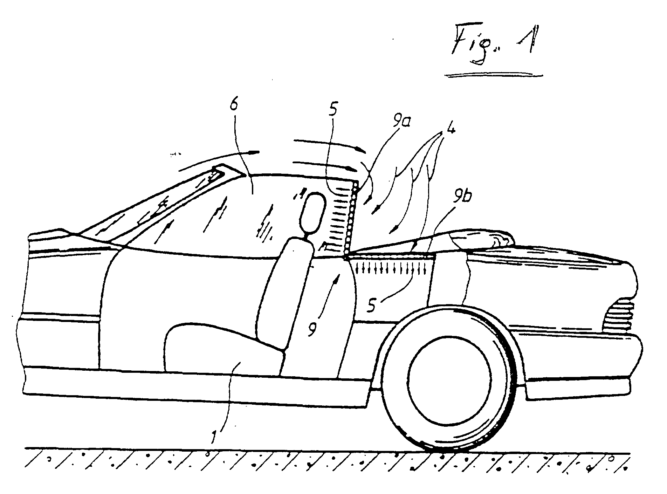

Wie aus Fig. 1 der Zeichnung zu entnehmen ist, ist hinter den Sitzen 1 des dargestellten Cabriolets ein Windschutz 9 angeordnet, der aus einem ersten aufrechten Teil 9a und einem zweiten, etwa horizontalen Teil 9b besteht, der den Raum hinter den Sitzen 1 nach oben abdeckt. Der erste, aufrechte Teil 9a des Windschutzes 9 schließt in der Höhe mit der Oberkante der voll ausgefahrenen vorderen Seitenscheibe 6 ab.

Beide Teile 9a und 9b des Windschutzes 9 werden von in Rahmen 13 aufgespannten, elastischen Netzen 14 gebildet und sind in nicht dargestellter Weise über Scharniere miteinander verbunden, derart, daß der erste, aufrechte Teil 9a nach hinten in eine Ruhelage verschwenkt werden kann, in der er auf dem zweiten, horizontalen Teil 9b aufliegt.

In Fig. 1 ist weiter durch Pfeile 4 die ankommende starke Luftströmung dargestellt, die durch das Netz 14 stark abgebremst wird, wie durch die parallelen kleinen Pfeile 5 angedeutet ist.

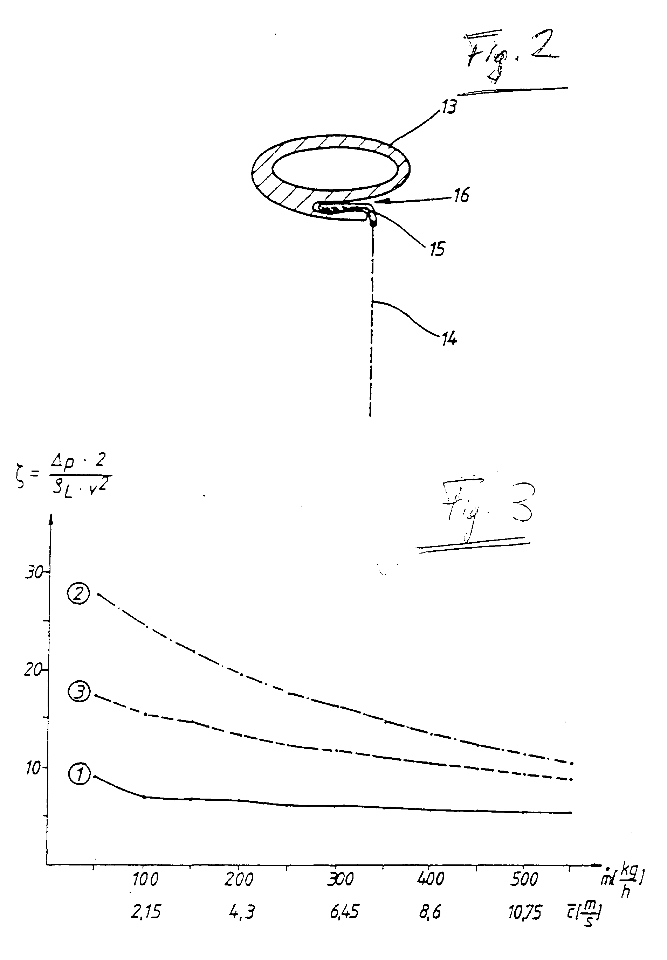

Um störende Pfeifgeräusche während des Fahrbetriebs zu vermeiden, kann - wie Fig. 2 der Zeichnung zeigt - der Rahmen 13 als Strangpreßprofil mit ovalem Querschnitt ausgebildet sein. Zur Befestigung des Netzes 14 am Rahmen 13 kann dieses in seinen Randbereichen mit einem sägezahnförmige Vorsprünge aufweisenden Keder 15 verbunden sein, der in eine Tasche 16 des Rahmens 13 einschiebbar ist und dort gehalten wird.

Fig. 3 der Zeichnung schließlich zeigt in Diagrammen Versuchsergebnisse mit Netzen unterschiedlicher Elastizität, wobei sich Kurve 1 auf ein Polyamidnetz, Kurve 2 auf ein Netz aus einem unter dem Namen "Elastan" auf dem Markt befindlichen Material und Kurve 3 ebenfalls auf ein Netz aus "Elastan", jedoch um 20% vorgedehnt, bezieht.

In diesem Diagramm bedeuten

$\zeta$ Widerstandsziffer
$\rho_L$ Luftdichte
v Luftgeschwindigkeit
$\Delta p$ Druckunterschied vor und hinter dem Netz
$\dot{m}$ Massenstrom in kg/Stunde
$\bar{c}$ mittlere Luftgeschwindigkeit in Meter/Sekunde

Besonders vorteilhaft ist die Verwendung von Netzen, deren Widerstandsziffer im Bereich zwischen den Kurven 1 und 2 liegt. Aus den Diagrammen ist klar entnehmbar, daß der Widerstand mit zunehmender Anströmgeschwindigkeit abnimmt, was u.a. auf die elastische Dehnung des Netzes zurückzuführen ist.
Ein Variieren der Elastizität ist sowohl aufgrund des verwendeten Materials als auch durch die Webart möglich.

Abschließend und zusammenfassend sei noch folgendes ausgeführt.

Der Windschutz weist eine gezielte Luftdurchlässigkeit auf, die auf die geometrischen Verhältnisse des jeweiligen Fahrzeuges bzw. auf die Anordnung des Windschutzes abzustimmen ist, um optimale Zugfreihaltung zu erreichen. Gezielte Luftdurchlässigkeit wird durch Verwendung unterschiedlicher Netz- oder Gewebematerialien mit unterschiedlicher Maschenweite erreicht (Seitenlänge der Maschen z.B. ca. 0,5 mm).

Der Windschutz ist so gestaltet, daß er durch eigene Elastizität in der Lage ist, die von hinten auftreffende Luftströmung so zu vergleichmäßigen, turbulenzarm zu machen und die Luftgeschwindigkeit so zu reduzieren, daß im Fahrzeuginnenraum ein niederer Strömungsgeräuschpegel ohne störendes Pulsieren wahrgenommen wird.

Die Elastizität der Wand bewirkt insbesondere, daß beim Auftreffen eines Turbulenzballens die Wand sich dehnt und sich dabei automatisch die Luftdurchlässigkeit vergrößert.

Durch diese variable Luftdurchlässigkeit, die bewirkt, daß bei zunehmender Fahrzeuggeschwindigkeit auch der im Innenraum größer werdende Unterdruck durch einen größeren Luftstrom aufgefüllt werden kann, ist gleichbleibende Zugfreihaltung über den ganzen Geschwindigkeitsbereich des Fahrzeuges möglich.

## Patentansprüche

1. Hinter einer Sitzreihe angeordneter Windschutz für Cabriolets mit einem ersten aufrechten, sich über die Sitze hinaus nach oben erstreckenden, über die gesamte Innenraumbreite verlaufenden Teil, das mit seiner Unterkante etwa auf Höhe der Bordkante des Fahrzeuges endet und dort in ein etwa horizontales, eine Öffnung hinter den Sitzen nach hinten überdeckendes Teil übergeht, **dadurch gekennzeichnet**, daß beide Teile (9a und 9b) des Windschutzes (9) über ein Scharnier miteinander verbunden und jeweils durch ein in einem Rahmen (13) aufgespanntes elastisch verformbares Netz (14) gebildet sind, das eine Verzögerung der von hinten auftreffenden Luftströmung (Pfeile 4) bewirkt.

2. Cabriolet nach Anspruch 1, **dadurch gekennzeichnet,** daß das Netz (14) bei einer Zugbelastung von 10 N eine Dehnung zwischen 4% und 40% aufweist.

3. Cabriolet nach Anspruch 1 oder 2, **dadurch gekennzeichnet,** daß der Rahmen (13) einen ovalen Querschnitt aufweist.

## Claims

1. Windscreen for a convertible saloon, arranged behind a seat row, having a first upright part extending upwards beyond the seats across the entire interior width, the lower edge of which terminates approximately level with the rim edge of the vehicle, where it merges into an approximately horizontal part covering the aperture behind the seats towards the rear,
characterised in that
the two parts (9a, 9b) of the windscreen (9) are joined to one another by a hinge connection, each being provided as an elastically deformable net (14) stretched across a frame (13), which delays the flow of air occurring from the rear (arrows 4).

2. Convertible saloon according to claim 1, characterised in that
under a tensile load of 10N, the net (14) stretches by between 4% and 40%.

3. Convertible saloon according to claim 1 or 2, characterised in that
the frame (13) has an oval cross section.

## Revendications

1. Brise-vent pour cabriolets, placé derrière une rangée de sièges et comportant une première partie qui s'étend vers le haut au-delà de ceux-ci, sur toute la largeur de l'habitacle, se termine avec son bord inférieur à peu près à la hauteur du rebord du véhicule et se prolonge à cet endroit par une partie à peu près horizontale, fermant vers l'arrière une ouverture située derrière les sièges, caractérisé en ce que les deux parties (9a et 9b) du brise-vent (9) sont assemblées l'une à l'autre par une charnière et sont chacune formées par un filet (12, 14) élastiquement déformable, qui est tendu dans un cadre (13) et provoque un ralentissement du courant d'air (flèches 4) arrivant de l'arrière.

2. Cabriolet selon la revendication 1, caractérisé en ce que sous une traction de 10 N, le filet présente un allongement compris entre 4 % et 40 %.

3. Cabriolet selon la revendication 1 ou 2, caractérisé en ce que le cadre (13) présente une section transversale ovale.

Fig. 1

Fig. 2

13

16

15

14

$$\zeta = \frac{\Delta p \cdot 2}{g_L \cdot v^2}$$

Fig. 3

| | | | | | | |
|---|---|---|---|---|---|---|
| 30 | | | | | | |
| ② | | | | | | |
| 20 | | | | | | |
| ③ | | | | | | |
| 10 | | | | | | |
| ① | | | | | | |
| | 100 | 200 | 300 | 400 | 500 | $\dot{m}[\frac{kg}{h}]$ |
| | 2,15 | 4,3 | 6,45 | 8,6 | 10,75 | $\bar{c}[\frac{m}{s}]$ |